# EUROPÄISCHE PATENTSCHRIFT

(11) **EP 2 726 311 B1**
(45) Veröffentlichungstag und Bekanntmachung des Hinweises auf die Patenterteilung: **08.02.2017**
(21) Anmeldenummer: 12734833.2
(22) Anmeldetag: 19.06.2012
(51) Int. Cl.: B60K 1/04, B60K 1/00, B60L 11/18

(54) **KÜHLUNG VON ELEKTRISCHEN SPEICHEREINHEITEN IN EINEM FAHRZEUG**
COOLING OF ELECTRIC STORAGE UNITS IN A VEHICLE
REFROIDISSEMENT DES UNITÉS D'ACCUMULATEUR ÉLECTRIQUE DANS UN VÉHICULE

(30) Priorität: 29.06.2011 DE 102011078267
(43) Veröffentlichungstag der Anmeldung: 07.05.2014
(73) Patentinhaber: Bayerische Motoren Werke Aktiengesellschaft, 80809 München (DE)
(72) Erfinder: PLATZ, Christoph, 85716 Unterschleißheim (DE); GORDNER, Achim, 85253 Grossberghofen (DE); KIND, Fabian, 80339 München (DE)
(86) Internationale Anmeldenummer: PCT/EP2012/061623
(87) Internationale Veröffentlichungsnummer: WO 2013/000754

(56) Entgegenhaltungen:
- DE-A1-102008 051 085
- JP-A- 10 297 570
- JP-A- 11 178 115
- US-A1- 2010 163 326

## Beschreibung

Die vorliegende Erfindung betrifft ein Zweirad gemäß dem Oberbegriff des Patentanspruchs 1.

Fahrzeughersteller setzen derzeit in verstärktem Maße auf Fahrzeuge mit Hybridantrieb oder reinem Elektroantrieb. Derartige Fahrzeuge benötigen elektrische Energiespeicher zur Versorgung des jeweiligen elektrischen Antriebs mit elektrischer Energie.

Die Leistungsfähigkeit der Energiespeicher und die damit verfügbare Energie sind in starkem Maße abhängig von der Temperatur der Energiespeicher, so dass diese möglichst in einem optimalen Temperaturbereich gehalten werden müssen, um eine möglichst hohe Leistung abrufbar zu machen. Da die Energiespeicher jedoch im Betrieb des Fahrzeugs bzw. bei Abgabe der elektrischen Energie thermische Energie in Form von Wärme erzeugen und sich damit über den optimalen Temperaturbereich hinaus erwärmen, muss eine Kühlung der Energiespeicher vorgesehen werden.

Bekannte Kühlvorrichtungen erfordern jedoch üblicherweise selbst elektrische Energie, so dass hierdurch einerseits die für den Antrieb verfügbare Kapazität und somit eine Reichweite des Fahrzeugs erheblich reduziert wird und andererseits die Energiespeicher zusätzliche Wärme produzieren.

Aus der gattungsbildenden JP 10 297570 A ist ein Motorroller mit einem Speichergehäuse bekannt, das einen Kanal aufweist, in dem Batteriezellen angeordnet sind. Ein Luftstrom wird in den Kanal eingeleitet, um die Batteriezellen unmittelbar zu umströmen und zu kühlen.

Die US 2010/0163326 A1 beschreibt ebenfalls ein Zweirad mit einem Speichergehäuse und Batteriezellen, wobei ein Luftstrom in das Speichergehäuse hinein geleitet wird, um die dort vorgesehenen Batteriezellen zu kühlen.

Es ist daher Aufgabe der Erfindung eine verbesserte Kühlung für elektrische Energiespeicher für Zweiräder bereitzustellen, welche die vorgenannten Nachteile reduziert oder sogar beseitigen kann.

Die Aufgabe wird erfindungsgemäß gelöst mit einem Zweirad gemäß dem Gegenstand des Patentanspruchs 1 sowie einem Speichergehäuse für ein derartiges Zweirad nach Patentanspruch 11. Vorteilhafte Ausgestaltungen ergeben sich aus den Unteransprüchen.

Demnach wird ein Zweirad vorgeschlagen mit
- einem Vorderrad,
- einem Hinterrad,
- einer elektrischen Antriebsmaschine , welche zum Antreiben des Hinter- und/oder Vorderrads ausgebildet ist, und
- mehreren elektrischen Speichereinheiten, die innerhalb eines Speichergehäuses untergebracht sind.

Außerdem umfasst das Speichergehäuse mindestens einen Luftschacht zum Abführen von thermischer Energie der Speichereinheiten, der zumindest in einem Lufteinströmbereich in Längsrichtung des Fahrzeugs erstreckt und derart angeordnet ist, dass in einem Betriebszustand des Fahrzeugs Umgebungsluft mittels Fahrtwind zum Abführen der thermischen Energie in den Luftschacht einströmt. Zusätzlich ist der Luftschacht als Teil einer Wandung des Speichergehäuses ausgebildet und das Speichergehäuse wasserdicht ausgebildet, wobei die Speichereinheiten im wasserdicht abgeschlossenen Inneren des Speichergehäuses angeordnet sind.

Vorzugsweise erstreckt sich der mindestens eine Luftschacht im Wesentlichen in Längsrichtung des Fahrzeugs.

Ausgangspunkt der Erfindung ist also ein Zweirad mit einem elektrischen Energiespeicher, welcher aus mehreren Speichereinheiten bestehen kann. Der Begriff "Speichereinheit" umfasst insbesondere Batteriezellen, Kondensatoren oder andere Einrichtungen, die zum Speichern von elektrischer Energie geeignet und bestimmt sind. Die einzelnen Speichereinheiten können parallel und/oder seriell miteinander verschaltet sein. Mehrere Speichereinheiten können zu einem Speichermodul miteinander verschaltet sein. Der elektrische Energiespeicher kann mehrere miteinander verschaltete Speichermodule aufweisen. Die Speichermodule sind wiederum in dem "Speichergehäuse" untergebracht.

Erfindungsgemäß ist der mindestens eine Luftschacht zum Abführen von überschüssiger thermischer Energie mittels Umgebungsluft vorgesehen. Dies bedeutet, dass eine Übertragung von thermischer Energie von den Speichereinheiten auf den Luftschacht und von diesem wiederum auf die einströmende Umgebungsluft erfolgt.

Der Luftschacht ist hierzu derart ausgestaltet, dass Umgebungsluft mittels des Fahrtwinds in den Luftschacht eingeleitet werden kann. Dies wird insbesondere durch eine Ausrichtung des Luftschachts und/oder zumindest des Lufteinströmbereichs bzw. einer Eintrittsöffnung des Luftschachts in Längsrichtung des Fahrzeugs erzielt, so dass im Betrieb des Fahrzeugs, zumindest im Falle einer Längsbewegung des Fahrzeugs, die das Fahrzeug umgebende Luft in den Luftkanal aufgrund der Fahrzeugbewegung strömt.

Ist lediglich der Lufteinströmbereich des Luftschachts in Längsrichtung des Fahrzeugs ausgerichtet, beispielsweise als Krümmer, so kann ein nachfolgender Abschnitt des Luftschachts in beliebiger Richtung verlaufen. Insbesondere kann dieser auch quer zur Längsrichtung angeordnet sein, so dass die ausgeleitete Luft seitlich, nach oben und/oder nach unten aus dem Fahrzeug ausgeleitet werden kann.

Ist der Luftschacht dagegen im Wesentlichen in Längsrichtung angeordnet, so erfolgt sowohl ein Einströmen als auch ein wesentlicher Anteil der Durchströmung des Luftschachts in Längsrichtung des Fahrzeugs. Beispielsweise kann für einen Auslass eine hiervon abweichende Richtung vorgesehen sein, wie an anderer Stelle ausführlich beschrieben ist.

Die Kühlung erfolgt also in beiden beschriebenen Ausführungsformen passiv, d.h. ohne einen Einsatz einer aktiven Kühlung.

Gemäß einer Ausführungsform sind die elektrischen Speichereinheiten in mindestens zwei Ebenen innerhalb des Speichergehäuses angeordnet und der mindestens eine Luftschacht ist jeweils als eine Zwischenebene zwischen zwei benachbarten Ebenen angeordnet. Des Weiteren ist der mindestens eine Luftschacht wärmeleitend zum Austausch von thermischer Energie mit der einströmenden Umgebungsluft mit mindestens einer der Speichereinheiten verbunden.

Demnach können die Speichereinheiten und der mindestens eine Luftschacht in mehreren Schichten parallel zueinander angeordnet sein. Beispielsweise können die Speichereinheiten in zwei Schichten und ein Luftschacht als Zwischenebene dazwischen angeordnet sein. Eine beispielhafte Darstellung ist nachfolgend in den Figuren beschrieben. Selbstverständlich können auch mehrere Schichten vorgesehen werden, die jeweils durch einen Luftschacht als Zwischenebene voneinander getrennt sind.

Erfindungsgemäß ist der Luftschacht als Teil einer Wandung des Speichergehäuses ausgebildet. Der Luftschacht kann insbesondere einen in Umfangsrichtung geschlossenen Kanal oder auch mehrere Kanäle umfassen. Beispielsweise ist der Luftschacht hierzu als Hohlprofil ausgebildet.

Der Luftschacht kann Teil des Speichergehäuses sein und somit mit einer ersten Oberfläche, insbesondere einer Innenseite seiner Kanäle, einen Abschnitt einer Außenfläche des Speichergehäuses und mit einer zweiten Oberfläche einen Abschnitt einer Innenfläche des Speichergehäuses bilden.

Erfindungsgemäß ist das Speichergehäuse wasserdicht ausgebildet, so dass ein Eindringen von Wasser in das Innere des Gemäß einer Ausführungsform ist daher mindestens eine Austrittsöffnung des Luftschachts seitlich an dem Speichergehäuse angeordnet, zum seitlichen Ausleiten der in den Luftschacht einströmenden Umgebungsluft aus dem Fahrzeug. Dies bedeutet, dass die in den Luftschacht eingeströmte Luft in dem Luftschacht geführt wird und aus dem Luftschacht durch die seitlichen Austrittsöffnungen austritt und somit der Umgebung wieder zugeführt wird. Vorzugsweise ist die mindestens eine Austrittsöffnung in einem bezüglich der Fahrtrichtung hinteren Abschnitt des Luftschachts bzw. des Speichergehäuses angeordnet. Im Falle eines im Wesentlichen in Längsrichtung des Fahrzeugs erstreckten Luftschachts erfolgt somit eine entsprechende in Längsrichtung gerichtete Durchströmung bis zu der beschriebenen mindestens einen Austrittsöffnung.

Gemäß einer anderen Ausführungsform ist die mindestens eine Austrittsöffnung des Luftschachts zum Ausleiten der in den Luftschacht einströmenden Umgebungsluft aus dem Luftschacht in dem Bereich des Hinterrades angeordnet. Dies bedeutet, dass die den Luftschacht durchströmende Umgebungsluft den Luftschacht bzw. das den Luftschacht umfassende Speichergehäuse durchströmt und an einem bezüglich der Fahrtrichtung hinteren Ende bzw. einer hinteren Stirnfläche im Bereich des Hinterrades austritt. Vorzugsweise wird die austretende Umgebungsluft unter Berücksichtigung aerodynamischer Aspekte in den Radkasten des Hinterrades eingeleitet.

Selbstverständlich ist aber auch eine Kombination der Anordnungen der Austrittsöffnungen möglich, so dass sowohl mindestens eine seitliche Austrittsöffnung als auch mindestens eine Austrittsöffnung im Bereich des Hinterrades vorgesehen werden kann.

Gemäß einer weiteren Ausführungsform ist mindestens ein aktiver Lüfter dem Luftschacht zum Unterstützen einer Durchströmung des Luftschachts mit Umgebungsluft zugeordnet. Der Lüfter kann als Gebläse ausgebildet sein und ein Durchströmen des Luftschachts unterstützen. Dies ist insbesondere sinnvoll, wenn der Fahrwind beispielsweise aufgrund einer zu geringen Fahrzeuggeschwindigkeit zu schwach ist oder bei einem kurzzeitigen Stillstand des Fahrzeugs entfällt. Bei längerem Stehen besteht jedoch kein oder nur ein geringer Bedarf, da sich in diesem Fall die Speichereinheiten aufgrund fehlender Belastung nicht weiter erwärmen. Der mindestens eine aktive Lüfter muss also lediglich in zeitlich begrenzten Situationen eingesetzt werden, so dass ein Energiebedarf und ein hiermit verbundener Verbrauch elektrischer Energie minimiert werden kann.

Vorzugsweise ist der mindestens eine aktive Lüfter im Bereich des Luftschachts angeordnet. Dies bedeutet, dass der mindestens eine aktive Lüfter innerhalb des Luftschachts, aber auch vor oder hinter dem Luftschacht, insbesondere im Bereich der Eintritts- und/oder der Austrittsöffnungen angeordnet sein kann. Hierdurch wird eine einfache Montage und Wartbarkeit erzielt.

Des Weiteren kann der mindestens eine Luftschacht Kühlrippen umfassen. Auf diese Weise kann eine Übertragung von thermischer Energie von dem Luftschacht bzw. dessen Wandung auf die durchströmende Luft erhöht und verbessert werden.

Die voranstehend beschriebene Kühlung kann in Zweirädern verschiedenster Art eingesetzt werden. Vorzugsweise ist das Zweirad ein Motorrad oder ein Motorrohr.

Wie bereits voranstehend beschrieben, können die Speichereinheiten Batteriezellen und/oder Kondensatoren umfassen.

Des Weiteren wird ein Speichergehäuse für ein Zweirad zur Aufnahme mehrerer elektrischer Speichereinheiten bereitgestellt, wobei das Speichergehäuse gemäß der gegebenen Beschreibung ausgebildet ist.

Die Erfindung wird nachfolgend unter Bezugnahme auf die Zeichnung näher erläutert. Hierbei zeigt:
Fig. 1 ein erfindungsgemäßes Fahrzeug mit einem Speichergehäuse mit Luftschacht in perspektivischer Ansicht,
Fig. 2 ein erfindungsgemäßes Speichergehäuse für ein Fahrzeug gemäß Fig. 1 in perspektivischer Ansicht, und
Fig.3 das Speichergehäuse gemäß Fig. 2 in einer schematischen, geschnittenen Seitenansicht.

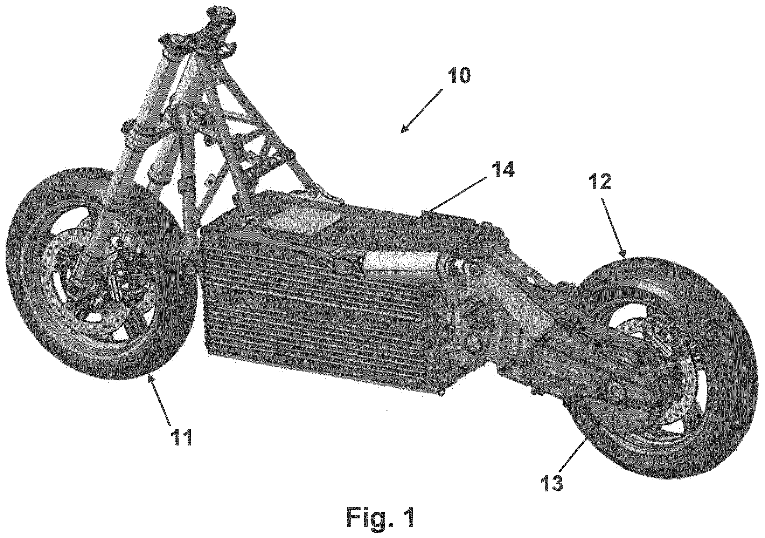

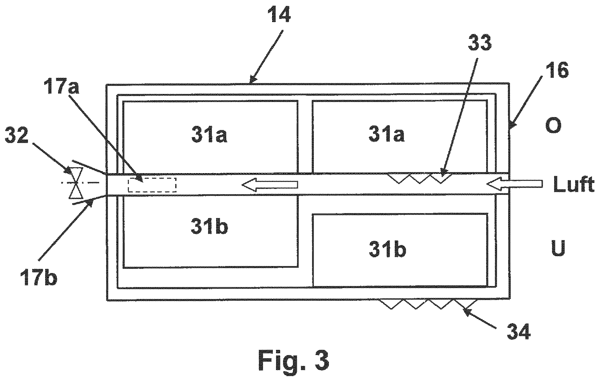

Fig. 1 zeigt ein erfindungsgemäßes Zweirad 10 mit einem Vorderrad 11 und einem Hinterrad 12 sowie einer elektrischen Antriebsmaschine 13. Diese ist zum Antreiben des Hinterrades 12 ausgebildet und wird über eine Anzahl von Speichereinheiten (vgl. Fig. 3) mit elektrischer Energie versorgt. Die Speichereinheiten sind in einem Speichergehäuse 14 angeordnet, welches nachfolgend beschrieben wird.

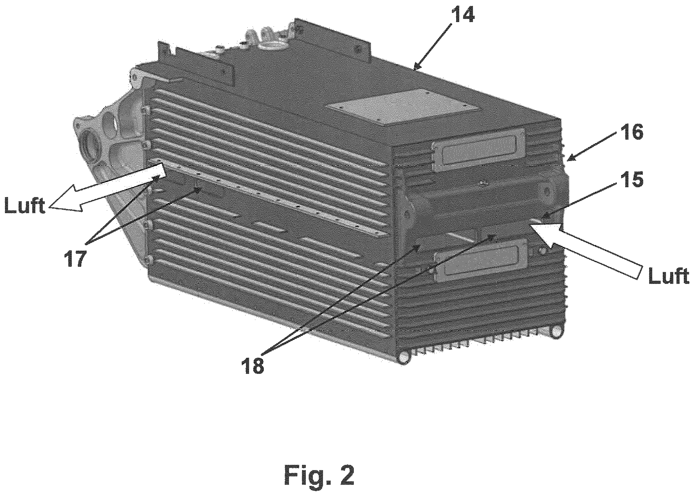

Fig. 2 zeigt das erfindungsgemäße Speichergehäuse 14 aus Fig. 1 für das Zweirad 10 in einer detaillierteren Ansicht. Das Speichergehäuse 14 weist einen im Wesentlichen quaderförmigen Grundkörper auf, in welchem die in Fig. 3 dargestellten Speichereinheiten wasserdicht angeordnet sind. Das Speichergehäuse 14 ist durch einen Luftschacht 15 in eine obere und eine untere Ebene unterteilt. Der Luftschacht 15 weist an einer ersten Stirnseite 16 des Speichergehäuses 14 eine zweigeteilte Lufteintrittsöffnung 18 zum Eintritt von Umgebungsluft in den Luftschacht 15 auf, wobei jeweils eine der Lufteintrittsöffnungen 18 des Luftschachts 15 einem Kanal des Luftschachts 15 zugeordnet ist. Der Luftschacht 15 bzw. dessen beiden Kanäle erstrecken sich in einer Längsrichtung des Speichergehäuses 14, die gleichzeitig auch die Längsrichtung des Fahrzeugs 10 definiert, so dass in einem Betriebszustand des Fahrzeugs 10, also insbesondere während einer Fahrt, Umgebungsluft (vgl. Pfeil) mittels Fahrtwind zum Abführen von thermischer Energie in den Luftschacht einströmt. An den beiden Seitenflächen (dargestellt ist lediglich eine Seitenfläche) sind jeweils Austrittsöffnungen 17 des Luftschachts 15 zum Ausleiten der in den Luftschacht 15 einströmenden Umgebungsluft vorgesehen.

Fig. 3 zeigt das Speichergehäuse 14 gemäß Fig. 2 in einer schematischen, geschnittenen Seitenansicht. Wie bereits beschrieben, erstreckt sich der Luftschacht 14 als horizontale Zwischenebene durch das Speichergehäuse 14 und unterteilt dieses in eine obere Ebene O und eine untere Ebene U. In den jeweiligen Ebenen sind Speichereinheiten 31 a (obere Ebene O) und 31 b (untere Ebene U) angeordnet, wobei diese jeweils baugleich ausgebildet sein können. Die Speichereinheiten 31 a der oberen Ebene sind direkt mit einer Wandung des Luftschachts 15 verbunden, indem diese als tragender Boden dient. Vorzugsweise ist eine Kontaktierung zwischen der Speichereinheit 31 a und der Wandung des Luftschachts auf eine gute Wärmeleitung optimiert, um einen möglichst guten Austausch von thermischer Energie zu erzielen. Beispielsweise kann hierzu eine flächige Kontaktierung und/oder Wärmeleitpaste zum Einsatz kommen.

Die Speichereinheiten 31 b der unteren Ebene (U) können auf unterschiedliche Art und Weise in dem Speichergehäuse 14 angeordnet sein. Fig. 3 zeigt lediglich beispielhaft zwei unterschiedliche Varianten, wobei die Speichereinheiten jeweils auf gleiche Art und Weise angeordnet sein können. Demnach können die Speichereinheiten 31 b auf einer als Boden dienenden Wandung des Speichergehäuses 14 befestigt und vorzugsweise wärmeleitend mit dieser verbunden sein. So kann thermische Energie von dem Speichereinheit 31 b zunächst auf die Wandung und von dieser an einen kühlenden Luftstrom, der die Wandung insbesondere während der Fahrt unterhalb oder seitlich umströmt, zumindest teilweise abgegeben werden. Ein weiterer Anteil kann über die Wandung auf den mit der Wandung verbundenen Luftschacht 15 übertragen werden, welcher einen Anteil der thermischen Energie auf die durch den Luftschacht 15 hindurch strömende Umgebungsluft abgibt.

Alternativ können die Speichereinheiten 31 b der unteren Ebene ebenfalls direkt wärmeleitend mit dem Luftschacht 15 verbunden werden. Beispielsweise können sie an diesem "aufgehängt" werden. Eine Übertragung der thermischen Energie der Speichereinheit 31 b erfolgt entsprechend der Beschreibung zu den Speichereinheiten 31 a der oberen Ebene.

In jedem Fall wird die von der Wandung des Luftschachts 15 aufgenommene thermische Energie an die durch den Luftschacht hindurch strömende Umgebungsluft abgegeben, die nach Durchströmen des Luftschachts durch die seitliche Austrittsöffnung 17a und/oder eine hintere Austrittsöffnung 17b austritt. Zur Unterstützung der Durchströmung des Luftschachts 15 kann mindestens ein aktiver Lüfter bzw. ein Gebläse 32 vorgesehen sein. Dieser kann im Bedarfsfall, beispielsweise bei langsamer Fahrt oder bei Stillstand des Fahrzeugs, zugeschaltet werden und somit einen konstanten Luftstrom in dem Luftschacht 15 bewirken.

Für eine verbesserte Abgabe von thermischer Energie an die den Luftschacht 15 durchströmende Umgebungsluft kann der Luftschacht 15 optional Kühlrippen 33 umfassen, die mindestens abschnittsweise an geeigneter Stelle angeordnet sind.

Gleiches gilt für das Speichergehäuse 14, das ebenfalls an geeigneten Stellen Kühlrippen 34 aufweisen kann, insbesondere in luftumströmten Bereichen, wie in einem Bodenabschnitt oder den Seitenwänden.

## Patentansprüche

1. Zweirad mit
- einem Vorderrad (11),
- einem Hinterrad (12),
- einer elektrischen Antriebsmaschine (13), welche zum Antreiben des Hinter- (12) und/oder Vorderrads (11) ausgebildet ist, und
- mehreren elektrischen Speichereinheiten (31a,31b), die innerhalb eines Speichergehäuses (14) untergebracht sind,
wobei
das Speichergehäuse (14) mindestens einen Luftschacht (15) zum Abführen von thermischer Energie der Speichereinheiten (31a,31b) umfasst, der sich zumindest in einem Lufteinströmbereich in Längsrichtung des Fahrzeugs (10) erstreckt und derart angeordnet ist, dass in einem Betriebszustand des Fahrzeugs (10) Umgebungsluft mittels Fahrtwind zum Abführen der thermischen Energie in den Luftschacht (15) einströmt,
**dadurch gekennzeichnet, dass** der Luftschacht (15) als Teil einer Wandung des Speichergehäuses (14) ausgebildet und das Speichergehäuse (14) wasserdicht ausgebildet ist und ein Eindringen von Wasser in das Innere des Speichergehäuses (14) verhindert, wobei die Speichereinheiten im wasserdicht abgeschlossenen Inneren des Speichergehäuses angeordnet sind.

2. Zweirad nach Anspruch 1, **dadurch gekennzeichnet, dass** sich der mindestens eine Luftschacht (15) im Wesentlichen in Längsrichtung des Fahrzeugs (10) erstreckt.

3. Zweirad nach einem der Ansprüche 1 oder 2, **dadurch gekennzeichnet, dass** die elektrischen Speichereinheiten (31 a,31 b) in mindestens zwei Ebenen (O, U) innerhalb des Speichergehäuses (14) angeordnet sind und der mindestens eine Luftschacht (15) jeweils als eine Zwischenebene zwischen zwei benachbarten Ebenen (O,U) angeordnet ist und zum Austausch von thermischer Energie mit der einströmenden Umgebungsluft wärmeleitend mit mindestens einer der Speichereinheiten (31 a,31 b) verbunden ist.

4. Zweirad nach einem der Ansprüche 1 bis 3, **dadurch gekennzeichnet, dass** eine Lufteintrittsöffnung (18) des mindestens einen Luftschachts (15) an einer in Fahrtrichtung des Fahrzeugs (10) weisenden Stirnseite (16) des Speichergehäuses (14) derart angeordnet ist, dass in einem Betriebszustand des Fahrzeugs (10) Umgebungsluft mittels des Fahrtwinds in den Luftschacht (15) einströmt.

5. Zweirad nach einem der Ansprüche 1 bis 4, **dadurch gekennzeichnet, dass** mindestens eine Austrittsöffnung (17) des Luftschachts (15) seitlich an dem Speichergehäuse (14) angeordnet ist, zum seitlichen Ausleiten der in den Luftschacht (15) einströmenden Umgebungsluft aus dem Fahrzeug (10).

6. Zweirad nach einem der Ansprüche 1 bis 5, **dadurch gekennzeichnet, dass** mindestens eine Austrittsöffnung (17) des Luftschachts (15) zum Ausleiten der in den Luftschacht (15) einströmenden Umgebungsluft aus dem Luftschacht (15) in den Bereich des Hinterrades (12) angeordnet ist.

7. Zweirad nach einem der Ansprüche 1 bis 6, **dadurch gekennzeichnet, dass** mindestens ein aktiver Lüfter (32) dem Luftschacht (15) zum Unterstützen einer Durchströmung des Luftschachts (15) mit Umgebungsluft zugeordnet ist.

8. Zweirad nach einem der Ansprüche 1 bis 7, **dadurch gekennzeichnet, dass** der mindestens eine Luftschacht (15) Kühlrippen (33) umfasst.

9. Zweirad nach einem der Ansprüche 1 bis 8, **dadurch gekennzeichnet, dass** das Zweirad (10) ein Motorrad oder ein Motorroller ist.

10. Zweirad nach einem der Ansprüche 1 bis 9, **dadurch gekennzeichnet, dass** die Speichereinheiten (31 a,31 b) Batteriezellen und/oder Kondensatoren umfassen.

11. Speichergehäuse für ein Zweirad (10) zur Aufnahme mehrerer elektrischer Speichereinheiten(31a,31b), **dadurch gekennzeichnet, dass** das Speichergehäuse (14) gemäß einem der Ansprüche 1 bis 10 ausgebildet ist.

## Claims

1. A two-wheeled vehicle having
a front wheel (11),
- a rear wheel (12),
- an electric drive machine (13) which is configured to drive the rear wheel (12) and/or the front wheel (11), and
- a plurality of electric storage units (31 a, 31 b) which are accommodated inside a storage housing (14),
wherein
the storage housing (14) comprises at least one air duct (15) for removing thermal energy from the storage units (31 a, 31 b), which air duct extends at least in an air inflow region in the longitudinal direction of the vehicle (10) and is arranged such that, in an operating state of the vehicle (10), ambient air flows into the air duct (15) by an airstream in order to remove the thermal energy, **characterised in that** the air duct (15) is configured as part of a wall of the storage housing (14) and the storage housing (14) is configured to be watertight and prevents water penetrating into the interior of the storage housing (14), the storage units being arranged in the interior of the storage housing, which interior is sealed in a watertight manner.

2. A two-wheeled vehicle according to claim 1, **characterised in that** the at least one air duct (15) extends substantially in the longitudinal direction of the vehicle (10).

3. A two-wheeled vehicle according to either claim 1 or claim 2, **characterised in that** the electric storage units (31 a, 31 b) are arranged in at least two planes (O, U) inside the storage housing (14) and the at least one air duct (15) is respectively arranged as an intermediate plane between two adjacent planes (O, U) and is connected to at least one of the storage units (31 a, 31 b) in a heat-conducting manner to exchange thermal energy with the inflowing ambient air.

4. A two-wheeled vehicle according to any one of claims 1 to 3, **characterised in that** an air inlet opening (18) in the at least one air duct (15) is arranged on a front side (16), in the direction of travel of the vehicle (10), of the storage housing (14) such that in an operating state of the vehicle (10), ambient air flows into the air duct (15) by means of the airstream.

5. A two-wheeled vehicle according to any one of claims 1 to 4, **characterised in that** at least one outlet opening (17) in the air duct (15) is arranged laterally on the storage housing (14), for laterally conducting the ambient air, flowing into the air duct (15), out of the vehicle (10).

6. A two-wheeled vehicle according to any one of claims 1 to 5, **characterised in that** at least one outlet opening (17) in the air duct (15) is arranged to conduct the ambient air, flowing into the air duct (15), out of the air duct (15) into the region of the rear wheel (12).

7. A two-wheeled vehicle according to any one of claims 1 to 6, **characterised in that** at least one active fan (32) is associated with the air duct (15) for assisting ambient air to flow through the air duct (15).

8. A two-wheeled vehicle according to any one of claims 1 to 7, **characterised in that** the at least one air duct (15) comprises cooling ribs (33).

9. A two-wheeled vehicle according to any one of claims 1 to 8, **characterised in that** the two-wheeled vehicle (10) is a motor cycle or a motor scooter.

10. A two-wheeled vehicle according to any one of claims 1 to 9, **characterised in that** the storage units (31 a, 31 b) comprise battery cells and/or capacitors.

11. A storage housing for a two-wheeled vehicle (10) for accommodating a plurality of electric storage units (31 a, 31 b), **characterised in that** the storage housing (14) is configured according to any one of claims 1 to 10.

## Revendications

1. Véhicule à deux roues comprenant :
une roue avant (11),
une roue arrière (12),
un moteur d'entraînement électrique (13) qui est réalisé pour permettre d'entraîner la roue arrière (12) et/ou la roue avant (11), et
plusieurs unités d'accumulation électriques (31a, 31b) qui sont installées à la partie interne d'un carter d'accumulation (14),
véhicule dans lequel le carter d'accumulation (14) comprend au moins un conduit d'aération (15) permettant d'extraire l'énergie thermique des unités d'accumulation (31a, 31b), qui s'étend au moins dans la zone d'admission d'air, dans la direction longitudinale du véhicule (10) et est installé de sorte que, à l'état de fonctionnement du véhicule (10) l'air environnant entre dans le conduit d'aération (15) du fait du vent de marche pour permettre d'évacuer l'énergie thermique,
**caractérisé en ce que**
le conduit d'aération (15) est réalisé sous la forme d'une partie d'une paroi du carter d'accumulation (14), et ce carter d'accumulation (14) est étanche à l'eau, et empêche la pénétration d'eau à sa partie interne, les unités d'accumulation étant installées dans la partie interne fermée de façon étanche à l'eau du carter d'accumulation.

2. Véhicule à deux roues conforme à la revendication 1,
**caractérisé en ce que**
le conduit d'aération (15) s'étend essentiellement dans la direction longitudinale du véhicule (10).

3. Véhicule à deux roues conforme à l'une des revendications 1 et 2,
**caractérisé en ce que**
les unités d'accumulation électrique (31a, 31b) sont installées dans au moins deux plans (O, U) à la partie interne du carter d'accumulation (14) et le conduit d'aération (15) est installé sous la forme d'un plan intermédiaire entre deux plans voisins (O, U) et est relié à au moins l'une des unités d'accumulation (31a, 31b) pour permettre l'échange d'énergie thermique avec l'air environnant admis de façon thermiquement conductrice.

4. Véhicule à deux roues conforme à l'une des revendications 1 à 3,
**caractérisé en ce qu'**
une ouverture d'admission d'air (18) du conduit d'aération (15) est installée sur la face frontale (16) du carter d'accumulation (14) tournée dans la direction de déplacement du véhicule (10) de sorte que, à l'état de fonctionnement du véhicule (10) l'air environnant entre dans le conduit d'aération (15) du fait du vent de marche.

5. Véhicule à deux roues conforme à l'une des revendications 1 à 4,
**caractérisé en ce qu'**
au moins une ouverture d'échappement (17) du conduit d'aération (15) est installée latéralement sur le carter d'accumulation (14) pour permettre d'extraire latéralement du véhicule de l'air environnant entrant dans le conduit d'aération (15).

6. Véhicule à deux roues conforme à l'une des revendications 1 à 5,
**caractérisé en ce qu'**
au moins une ouverture d'échappement (17) du conduit d'aération (15) est installée de façon à permettre d'évacuer du conduit d'aération (15) l'air environnant entrant dans celui-ci (15) dans la zone de la roue arrière (12).

7. Véhicule à deux roues conforme à l'une des revendications 1 à 6,
**caractérisé en ce qu'**
au moins un ventilateur actif (32) est associé au conduit d'aération (15) pour permettre d'assister l'écoulement de l'air dans le conduit d'aération (15).

8. Véhicule à deux roues conforme à l'une des revendications 1 à 7,
**caractérisé en ce que**
le conduit d'aération (15) comprend des nervures de refroidissement (33).

9. Véhicule à deux roues conforme à l'une des revendications 1 à 8,
**caractérisé en ce qu'**
il est constitué par une motocyclette ou un scooter.

10. Véhicule à deux roues conforme à l'une des revendications 1 à 9,
**caractérisé en ce que**
les unités d'accumulation (31a, 31b) comprennent des cellules de batterie et/ou des condensateurs.

11. Carter d'accumulation pour un véhicule à deux roues (10) destiné à recevoir plusieurs unités d'accumulation électrique (31a, 31b),
**caractérisé en ce qu'**
il est réalisé conformément à l'une des revendications 1 à 10.
